**Europäisches Patentamt**

**European Patent Office**

**Office européen des brevets**

(11) Veröffentlichungsnummer: **0 169 417**
**B1**

# EUROPÄISCHE PATENTSCHRIFT

(45) Veröffentlichungstag der Patentschrift:
27.09.89

(51) Int. Cl.⁴: **E 04 D 15/04**

(21) Anmeldenummer: **85108311.3**

(22) Anmeldetag: **05.07.85**

(54) Verfahren und Vorrichtung zur Herstellung von Verbindungsnähten zwischen sich überlappenden Teilen aus elastomerem oder thermoplastischem Werkstoff.

(30) Priorität: **24.07.84 DE 3427215**

(43) Veröffentlichungstag der Anmeldung:
**29.01.86 Patentblatt 86/5**

(45) Bekanntmachung des Hinweises auf die Patenterteilung:
**27.09.89 Patentblatt 89/39**

(84) Benannte Vertragsstaaten:
**AT BE CH DE FR GB IT LI LU NL SE**

(56) Entgegenhaltungen:
**DE-A- 2 331 918**
**US-A- 4 087 309**

(73) Patentinhaber: **Saar-Gummiwerk GmbH,
D-6648 Wadern-Büschfeld (DE)**

(72) Erfinder: **Bischoff, Hans-Georg, Dipl.-Phys., Am
Sandberg 15, D-6648 Wadern-Noswendel (DE)**
Erfinder: **Koch, Franz, Blumenstrasse 4,
D-6648 Wadern-Büschfeld (DE)**

ACTORUM AG

## Beschreibung

Die Erfindung betrifft ein Verfahren und eine Vorrichtung zur Herstellung von Verbindungsnähten zwischen sich überlappenden Teilen aus elastomerem oder thermoplastischem Werkstoff, insbesondere von Dach- bzw. Dichtungsbahnen.

Bei der Abdichtung beispielsweise von Flachdächern mit sogenannten Dach- oder Dichtungsbahnen bereitet die Herstellung insbesondere flachliegender Verbindungen zwischen den einzelnen zu verlegenden Dichtungsbahnen bzw. -planen grosse Schwierigkeiten.

In der Regel werden aus einzelnen Bahnen vorgefertigte Planen verlegt. Während bei der Vorfertigung der Planen ohne Schwierigkeiten eine dauerhafte wasserdichte Verbindung der sich überlappenden Einzelbahnen durch Vulkanisation der Verbindungsnähte in einer stationären Anlage erfolgen kann, werden die auf der Baustelle zu fertigenden Verbindungsnähte zwischen den einzelnen Planen z.B. durch Kleben hergestellt. Die geklebte Naht wird üblicherweise zusätzlich durch ein selbstklebendes Band abgedeckt.

Bei der stirnseitigen Verbindung von aus Einzelbahnen bestehenden Planen treten infolge der dort auslaufenden Nähte zwischen den Einzelbahnen sogenannte T-Stösse oder – sofern die Nähte beider Planen zusammentreffen – Kreuzstösse auf, die wegen des stufenförmigen Verlaufes der Verbindungsnaht besonders anfällige Schwachstellen darstellen. Sie müssen zusätzlich, z.B. durch Auftragen einer Dichtungspaste, gesichert werden.

Diese Klebeverbindungen weisen jedoch – z.B. gegenüber der Vulkanisation – schwerwiegende Nachteile auf. Die Planen können praktisch nicht spannungsfrei verlegt werden. Da aber der Kleber eine gewisse Aushärtezeit benötigt, wirken sich während der Aushärtezeit des Klebers im Nahtbereich der Planen auftretende Spannungen und Kräfte nachteilig auf die Güte der Klebeverbindung aus. Aber auch nach dem Aushärten bleibt die Festigkeit der Klebung grundsätzlich temperaturabhängig. Bei erhöhter Temperatur – auf Dächern können Temperaturen von über 80°C auftreten – erweicht die Klebeverbindung. Durch die Einwirkung wechselnder Temperaturen kann im Laufe der Zeit die Klebeverbindung daher soweit geschädigt werden, dass sie undicht wird. Es werden dann sehr aufwendige und kostspielige Sanierungsarbeiten erforderlich.

Die Herstellung insbesondere flachliegender vulkanisierter Verbindungsnähte auf der Baustelle selbst scheiterte bisher jedoch daran, dass es nicht möglich ist, die zu verbindenden Bahnen bzw. Planen während der Vulkanisation sicher zu fixieren, da die Vulkanisationsvorrichtung die flachliegenden Planen und damit die herzustellende Naht nicht untergreifen kann. Aus diesem Grunde kann auch der zur Vulkanisation erforderliche Anpressdruck auf die Naht nur durch das Eigengewicht der Vulkanisationsvorrichtung aufgebracht werden. Es wären daher entsprechend schwere Geräte notwendig, die auf Baustellen, insbesondere auf Dächern, kaum noch zu handhaben sind.

Zur Vermeidung von Klebeverbindungen wurde auch schon vorgeschlagen, die Planen durch stehende vulkanisierte Nähte zu verbinden. Die verlegten Planen werden im Randbereich rechtwinklig umgebogen und im Nahtbereich gegeneinander gepresst und vulkanisiert. Die Vulkanisiervorrichtung kann in diesem Falle die Naht übergreifen und der Anpressdruck somit in bekannter Weise durch mechanische oder hydraulische Verspannung der beiden Andruckflächen gegeneinander aufgebracht werden. Eine nach diesem Prinzip arbeitende Vorrichtung, die allerdings in der dort gezeigten Ausführung nicht ohne weiteres zum Einsatz auf Gebäudedächern geeignet ist, ist z.B. in der DE-OS 2 331 918 beschrieben.

Stegnähte erfordern jedoch in jedem Falle eine zusätzliche Abdeckung, z.B. durch eine Kiesauflage. Die Verbindung von T-Stössen und der Anschluss von Manschetten wie Kamineinfassungen u.ä. sind praktisch nicht herstellbar.

Aufgabe der vorliegenden Erfindung ist es, ein Verfahren und eine Vorrichtung zur Verbindung von sich überlappenden Teilen aus elastomerem oder thermoplastischem Werkstoff anzugeben, das sich insbesondere zur einfachen und wirtschaftlichen Herstellung von dauerhaften, dichten Verbindungsnähten, insbesondere flachliegenden Verbindungsnähten auf Baustellen bzw. Dächern eignet.

Diese Aufgabe wird erfindungsgemäss dadurch gelöst, dass die zu verbindenden Teile zwischen zwei mechanisch nicht verbundenen Druckbalken, deren Anlageflächen vorzugsweise ausserhalb des Nahtbereiches Vertiefungen aufweisen, eingespannt werden, wobei die zur Fixierung und Verbindung der Teile erforderlichen Anpresskräfte durch Evakuierung der durch die Vertiefungen in den Anlageflächen und die aufliegenden zu verbindenden Teile gebildeten Saugkammern erfolgt.

Eine Vorrichtung zur Durchführung des Verfahrens zeichnet sich dadurch aus, dass die Vertiefungen beidseitig des Nahtbereiches in den Anlageflächen der Druckbalken angeordnet und jeweils an eine Saugpumpe anschliessbar sind.

Mit dem erfindungsgemässen Verfahren und der erfindungsgemässen Vorrichtung können auch auf Baustellen bzw. Dächern in einfacher Weise dauerhafte dichte Verbindungsnähte, insbesondere auch flachliegende Verbindungsnähte, zwischen sich überlappenden Teilen aus elastomeren oder thermoplastischen Werkstoffen, beispielsweise durch Vulkanisation, hergestellt werden.

Ein Druckbalken wird unter die zu verbindenden Teile geschoben, so dass der Bereich der Überlappung über dem Nahtbereich des Druckbalkens liegt. Durch Evakuierung der durch die vornehmlich seitlich des Nahtbereiches in den Anlageflächen des Druckbalkens befindlichen Vertiefungen und die aufgelegten Planen gebildeten Saugkammern werden die beiden Bahnen auf dem untergelegten Druckbalken fixiert. Anschliessend wird der zweite Druckbalken, der in der Regel das Heizelement enthält, aufgelegt und seinerseits durch Evakuierung der durch die Vertiefungen in seinen Anlagenflächen und die Planen gebildeten Saugkammern infolge des Atmosphärendruckes fest angepresst. Der so erzeugte Anpressdruck reicht zur Vulkanisation der Verbindungsnaht aus.

Zweckmässigerweise sind die Anlageflächen der Druckbalken ausserhalb des Nahtbereiches rippen- oder noppenartig ausgebildet. Die Evakuierung der von den Anlageflächen und den aufgelegten Planen gebildeten Saugkammern kann entweder durch Bohrungen in den Anlageflächen und unter den Anlagenflächen angeordnete Sammelkanäle oder auch durch stirnseitige Sammelkanäle erfolgen.

Der Gesamtquerschnitt der die Saugkammern bildenden Rippentäler bzw. Senken kann durch die Wahl der Breite der Druckbalken in einfacher Weise so bestimmt werden, dass einerseits bei Evakuierung der gebildeten Saugkammern durch den Atmosphärendruck ausreichend grosse Anpresskräfte aufgebracht werden, andererseits aber auch durch die Kämme der Rippen bzw. die Oberflächen der Noppen eine ausreichend grosse Anlagefläche vorhanden ist, so dass im Einspannbereich eine ebene Auflage der zu verbindenden Teile sichergestellt ist.

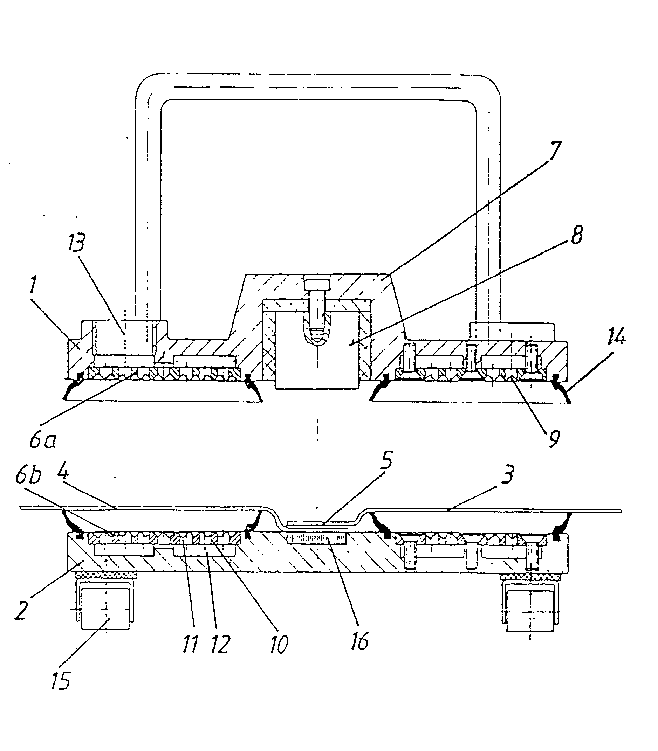

Die Erfindung wird im folgenden anhand des in der Figur schematisch dargestellten Ausführungsbeispieles weiter erläutert.

Eine erfindungsgemässe Vorrichtung besteht aus zwei mechanisch nicht miteinander verbundenen Druckbalken, dem Oberbalken 1 und dem Unterbalken 2. Während der Vulkanisation werden die sich im Bereich der herzustellenden Naht 5 überlappenden Teile 3, 4 zwischen den Anlageflächen 6a, 6b der Druckbalken 1, 2 fixiert und zusammengepresst. Die Erhitzung der Naht 5 erfolgt über ein stabförmiges, in einem Mittelsteg des Oberbalkens 1 angeordnetes elektrisches Heizelement 8, in das ein Temperaturfühler integriert sein kann.

Die Anlageflächen 6a, 6b der Druckbalken 1, 2 weisen ausserhalb des Nahtbereiches 5 Vertiefungen 9 auf. Im dargestellten Beispiel sind in die Anlageflächen 6a, 6b Rippenplatten 10 eingesetzt, deren Längsnuten die Vertiefungen 9 bilden, während die Rippenkämme eine ausreichende Auflagefläche für die zu verbindenden Teile 3, 4 bilden.

Die Vertiefungen 9 sind durch Bohrungen 11 jeweils mit unter den Rippenplatten 10 vorgesehenen Kanälen 12 verbunden, an die über stirnseitige oder, z. B. beim Oberbalken 1, an der Oberseite angeordnete Anschlüsse 13 eine Saugpumpe angeschlossen werden kann.

Die Vertiefungen 9 bilden mit den anliegenden zu verbindenden Teilen 3, 4 Saugkammern. Durch Evakuieren dieser Saugkammern werden einmal die zu verbindenden Teile 3, 4 fest auf dem Unterbalken 2 fixiert und seinerseits der Oberbalken 1 gegen den Unterbalken 2 mit den aufgelegten Teilen 3, 4 gepresst. Durch eine ausreichende Breite der Druckbalken 1, 2 und damit der Gesamtfläche der für die Bildung von Saugkammern verfügbaren Vertiefungen kann in jedem Fall der zur Vulkanisation erforderliche Anpressdruck sichergestellt werden.

Zum Abdichten der gebildeten Saugkammern können zusätzliche Dichtungen 14 vorgesehen werden. Eine gewisse Lekage ist jedoch durchaus zulässig, da die Saugpumpe auch während der Vulkanisation eingeschaltet bleiben kann.

Zur Verbindung der beiden Teile 3, 4 wird zunächst der zur leichteren Handhabung mit Rollen 15 ausgerüstete Unterbalken 2 unter die noch offene Naht 5 geschoben und die aufgelegten Teile 3, 4 durch Evakuierung der Saugkammern fixiert. Anschliessend wird der Oberbalken 1 aufgelegt und durch Evakuierung auch seiner Saugkammern die beiden Druckbalken 1, 2 solange gegeneinandergepresst, bis der Vulkanisationsprozess abgeschlossen ist. Die Länge der Druckbalken 1, 2 ist ausschliesslich durch die Forderung nach einfacher und leichter Handhabbarkeit begrenzt. Längere Nähte 5 können ohne weiteres in mehreren Abschnitten nacheinander gefertigt werden.

Das Heizelement 8 ist druckfest ausgebildet und ragt mit seiner Stirnfläche etwas über die Anlageflächen 6a, 6b der Druckbalken 1, 2 hervor. Dadurch wird sichergestellt, dass während der Vulkanisation die herzustellende Naht 5 ausreichend fest zusammengepresst wird. Der Überstand des Heizelementes 8 wird ohne Schwierigkeit durch die Elastizität des Werkstoffes der zu verbindenden Teile 3, 4 sowie ggf. der Dichtungen 14 aufgenommen. Darüber hinaus kann im Nahtbereich des Unterbalkens 2 eine Auflage 1 aus Silicon oder einem anderen geeigneten Material vorgesehen sein, in die ggf. auch eine zusätzliche Heizung integriert sein kann. Eine solche Auflage 16 könnte z.B. bei der Herstellung von T-Stössen vorteilhaft sein.

Zur Fertigung von in sich geschlossenen Nähten z.B. zum Anschliessen von Manschetten oder zum Ausbessern von Beschädigungen in bereits verlegten Planen kann der Unterbalken 2 durch eine einfache Gegenplatte, z.B. aus Silicon, die der Form der Manschette bzw. der Naht angepasst ist und unter der verlegten Plane verbleibt, ersetzt werden, da es dabei nur darauf ankommt, eine ebene Unterlage zur Verfügung zu haben, auf eine eigene Fixierung der Plane auf der Gegenplatte aber verzichtet werden kann. In diesen Fällen muss unter Umständen, jedenfalls dann, wenn die Naht nicht aus einzelnen geraden Teilstücken zusammengesetzt werden kann, auch ein in seiner Form an den Nahtverlauf angepasster Oberbalken verwendet werden. Die Anzahl der ggf. erforderlichen speziell geformten Oberbalken kann jedoch durch eine gewisse Vereinheitlichung von Grösse und Form der einzelnen Manschettenanschlüsse klein gehalten werden.

## Patentansprüche

1. Verfahren zur Herstellung von Verbindungsnähten (5) zwischen sich überlappenden Teilen (3, 4) aus elastomerem oder thermoplastischem Werkstoff, insbesondere von Dach- bzw. Dichtungsbahnen, wobei die zu verbindenden Teile (3, 4) im Bereich der herzustellenden Naht (5) gegeneinander gepresst und erhitzt werden, dadurch gekennzeichnet, dass die zu verbindenden Teile (3, 4) zwischen zwei mechanisch nicht verbundene Druckbalken (1, 2), deren Anlageflächen (6a, 6b) vorzugsweise ausserhalb des Nahtbereiches (5) Vertiefungen (9) aufweisen, eingespannt werden, wobei die zur Fixierung und Verbindung der Teile (3, 4) erforderlichen Anpresskräfte durch Evakuierung der durch die Vertiefungen (9) in den Anlageflächen (6a, 6b) und die aufliegenden zu verbindenden Teile (3, 4) gebildeten Saugkammern erfolgt.

2. Vorrichtung zur Durchführung des Verfahrens nach Anspruch 1, wobei zumindest ein Druckbalken (1) ein über die gesamte Länge des im Mittelbereich der Anlageflächen verlaufenden Nahtbereiches (5) angeordnetes und an die Breite der herzustellenden Naht (5) angepasstes Heizelement (8) aufweist, dadurch gekennzeichnet, dass die Vertiefungen (9) beidseitig des Nahtbereiches (5) in den Anlageflächen (6a, 6b) der Druckbalken (1, 2) angeordnet und jeweils an eine Saugpumpe anschliessbar sind.

3. Vorrichtung nach Anspruch 2, dadurch gekennzeichnet, dass die Anlageflächen (6a, 6b) der Druckbalken (1, 2) ausserhalb des Nahtbereiches (5) zumindest teilweise rippen- oder noppenartig ausgebildet sind.

## Claims

1. A process for the production of connecting seams (5) between overlapping components (3, 4) made of elastomeric or thermoplastic material, in particular widths of roofing or sealing material, where the components (3, 4) which are to be connected are pressed against one another and heated in the region of the seam (5) which is to be formed, characterised in that the components (3, 4) to be connected are clamped between two clamping bars (1, 2) which are not mechanically connected and whose contact surfaces (6a, 6b) contain recesses (9), preferably outside the region of the seam (5), where the pressure forces required to fix and connect the components (3, 4) are produced by evacuating the suction chambers formed by the recesses (9) in the contact surfaces (6a, 6b) and the applied components (3, 4) which are to be connected.

2. Apparatus for carrying out the process claimed in Claim 1, where at least one clamping bar (1) comprises a heating element (8) which is arranged along the entire length of the seam region (5), which extends in the central region of the contact surfaces, and which is adapted to the width of the seam (5) to be produced, characterised in that the recesses (9) are arranged in the contact surfaces (6a, 6b) of the clamping bars (1, 2) on both sides of the seam region (5) and can each be connected to a suction pump.

3. Apparatus according to Claim 2, characterised in that the contact surfaces (6a, 6b) of the clamping bars (1, 2) are at least partially ribbed or burled outside the seam region (5).

## Revendications

1. Procédé de préparation de cordons de soudure (5) entre des pièces se chevauchant (3, 4) en matériaux élastomères ou thermoplastiques, notamment des bandes d'étanchéité ou de toit, dans lequel les pièces à réunir (3, 4) sont comprimées l'une sur l'autre dans la zone de soudure à réaliser (5) et sont chauffées, caractérisé en ce que les pièces à réunir (3, 4) sont maintenues entre deux bras de compression (1, 3) non reliés mécaniquement dont les surfaces d'appui (6a, 6b) présentent des alvéoles (9) de préférence en dehors de la zone de soudure, la force de pression nécessaire à la fixation et à la liaison des pièces (3, 4) est obtenue par mise sous vide des chambres d'aspiration formées par les alvéoles (9) dans les surfaces d'appui (6a, 6b) et les pièces à souder (3, 4) reposant sur elles.

2. Dispositif pour réaliser le procédé selon la revendication 1, dans lequel au moins un bras de compression (1) présente un élément de chauffage (8) disposé sur toute la longueur de la zone de soudure s'étendant dans la plage médiane de la surface d'appui et adapté à la largeur de la soudure (5) à réaliser, caractérisé en ce que les alvéoles (9) disposées des deux côtés de la zone de soudure (5) dans les surfaces d'appui (6a, 6b) des bras de compression (1, 2) et peuvent être reliées à une pompe d'aspiration.

3. Dispositif selon la revendication 2, caractérisé en ce que les surfaces d'appui (6a, 6b) des bras de compression (1, 2) au delà de la zone de soudure (5) sont formés, au moins en partie, de nervures ou de nappes.